# EUROPEAN PATENT APPLICATION

(11) **EP 4 169 656 A1**
(43) Date of publication of application: **26.04.2023**
(21) Application number: 21204117.2
(22) Date of filing: 22.10.2021
(51) Int. Cl.: B23K 26/08, B23K 26/06

(54) **METHOD AND DEVICE FOR LASER PROCESSING OF TRANSPARENT MATERIALS**

(71) Applicant: Valstybinis Moksliniu Tyrimu Institutas Fiziniu Ir Technologijos Mokslu Centras, 02300 Vilnius (LT)
(72) Inventor: GECYS, Paulius, 06280 Vilnius (LT); DUDUTIS, Juozas, 06283 Vilnius (LT)
(74) Representative: Draugeliene, Virgina Adolfina

(57) **Abstract**

The invention relates to cutting, milling and drilling of (substantially) transparent materials with a laser. Moreover, the invention relates to material processing using a pulsed laser having at least one wavelength and the ability to vary the pulse duration and/or pulse burst envelope duration in the range from nanoseconds to picoseconds or even to femtoseconds. The invention further relates to laser processing using a so-called stitching method to stitch material parts at workpiece cutting paths, for workpieces being larger than the laser beam scanning field or work field dimensions.

## Description

### Technical field to which invention relates

The invention relates to cutting, milling and drilling of transparent materials with a laser. Moreover, the invention relates to material processing using a pulsed laser having at least one wavelength and the ability to vary the pulse duration and/or pulse burst envelop duration in the range from nanoseconds to picoseconds or even to femtoseconds.

### Indication of the background art

Rear-surface laser processing is well-known technique, while being mentioned in various patent references as well as in many scientific publications. In this case, material processing is realized focusing the laser beam through (substantially) transparent material to its rear surface, opposite to the laser beam impingement surface. Rear-surface (bottom-up) laser processing has many advantages over front-surface (top-down) laser processing despite limited materials which are (substantially) transparent to an applicable laser wavelength. The major advantage of such technique is that the laser ablation residual products such as splinters, gasses or other emitted mass of herewith generated effect do not interfere with the laser beam. Further, the cut side walls are taper less and it is possible to completely avoid "V" shaped channel/hole formation. High aspect ratio holes or cut paths can be produced in relatively thick transparent materials, being hardly possible with front-surface direct ablation. This is particularly critical for 1-20 mm thick transparent material cutting or drilling. However, rear-surface machining also has drawbacks. Surface chipping for example is relatively significant for fast fabrication regimes at rather long pulse duration (e.g. ns-pulses), while short pulse durations (e.g. ps-pulses), on the other hand, can substantially reduce bulk and surface chipping, hence decreasing laser milled surface roughness, however resulting in low process throughput.

There is a need for a regime where we can have best of both, meaning where process throughput can be augmented at pulses avoiding bulk and surface chipping.

Following patent references can be cited regarding rear-surface laser processing. In US4473737 a reverse laser drilling method is described, to be used for sapphire and silicon-on-sapphire materials. The method includes a laser source emitting at certain wavelength with a single pulse duration of 200 nanoseconds, to be focused through the transparent or substantially transparent material to the rear-surface. The described method includes no fast beam deflection system, hence only to be applied for drilling holes. Similar rear-surface processing method of transparent materials is described in DE10029110 B4, wherein a q-switched or mode-locked laser source being used. In particular case, the laser focus is tuned along vertical (z-axis) and horizontal (xy-plane) directions and the laser ablated material is removed layer-by-layer. The method further includes a pump unit for the ablated material to be sucked from the processed area. While using either q-switched or mode-locked laser, high throughput fabrication is not possible.

In addition, some patent references can be mentioned regarding material processing using different pulse durations. Laser based modification of transparent materials using both nanosecond (1 ns to 100 ns) and ultrashort (100 fs to 10 ps) laser pulses is referred to in US10137527. The first series of nanosecond pulses induce material modification and substantially more material modification is achieved when the second series of ultrashort laser pulses are applied. The transparent material modification (ablation) is achieved by the combination of both nanosecond and ultrashort pulses with certain delay between the pulses. The patent describes the use of nanosecond and ultrashort pulsed lasers respectively, synchronized in time and providing optical pulses within the same optical path. Such processing setup arrangement has many disadvantages amongst which laser pulse synchronization and, more importantly, precise alignment of both lasers' optical paths in space. US patent US8785813 describes the use of at least one laser source to generate output pulses having pulse width in a range from tens of femtoseconds to about 500 picoseconds for drilling, cutting, or dicing of multi-material workpiece comprising of semiconductor material. Some embodiments describe the use of even longer pulses of 10 nanoseconds. The long and short pulses may be applied in separate passes, or by applying burst of pulses to the workpiece at any single pass. This patent refers to using direct laser ablation starting from the top-side of the workpiece (the side where the laser beam impinges the workpiece surface first) and the workpiece material is limited to multi material semiconductors. In patent application WO2005/038994 A2 the use of pulse trains being described, with duration ranging from 1 nanosecond to 10 picoseconds and durations > 1 nanosecond for memory link semiconductor material processing. Processing of the target material being enabled without changing the surrounding material electrical and physical properties. The described laser system may comprise of a first and a second laser combined by means of a beam combiner. Although the use of different pulse durations for the target material processing being considered, the ablation process is arranged through the top-side (the side where the laser beam impinges the workpiece surface first) and is only claimed for the memory link processing applications in semiconductor materials.

### Technical problem to be solved

Aim of the invention is to achieve improvements in laser processing of transparent materials by avoiding chipping and cracking at the surface of a feature being cut or treated, simultaneously achieving high throughput material removal in the bulk of a material workpiece and precise material removal at or close to the feature surfaces. Furthermore the invention seeks to extend the scope of its application by enabling or facilitating process of large features, i.e. being larger than the scanning field of the laser beam whereby processing takes place.

### Summary of the invention

The essence of the invention is achieved by the method and device for laser processing of transparent materials according to claims 1-12.

The invention is in the field of methods for material processing on a sample or workpiece with a laser. The laser may have a certain wavelength, which may be variable. Hence, multiple wavelengths may be applicable in this latter case. Such methods are based on moving the laser beam of the laser and the workpiece relative to one another to thereby remove material with the laser beam on the workpiece. The relative movement being for example translative, meaning a displacement in one or two or three (orthogonal) directions e.g. along respectively x, y or z-axis of the Cartesian coordinate system.

Preferably a (substantial) part of the sample or workpiece material is transparent, in particular to the one or more laser wavelengths of the laser being used for processing.

In an embodiment of the invention the method is based on a layer-by-layer removal of material.

A typical laser system for material processing of (or on) a workpiece with a laser, comprises a laser and connected to the laser, an optical system, including laser beam deflection or laser scanning system, being arranged in between the laser and the workpiece, wherein the optical system being adapted for manipulating e.g. moving the laser beam focus position or focal point. The optical system may comprise of multiple components and various optical paths for manipulating the laser beam e.g. at particular wavelength before it reaches the scanner or scanning module (also being part of the optical system). The scanner may be used for focal positioning of the laser beam at the location where the workpiece should be processed. By means of the scanner, the laser beam will scan or move over a predetermined area wherein the workpiece being placed, called the work field or so-called scanning field. Hence, the work field or scanning field in material processing applications can be defined as the area wherein the laser beam is scanning or moving relative to the workpiece. The work field defines in fact the boundaries wherein the laser processing of the workpiece takes place. However, the work field for the method, with such system relying solely on this type of laser beam manipulation, is defined by the capabilities of this optical system, hence the work field is depending on the optical system (scanner, focusing lens, focal distance, aperture size, tele-centric or not, ...).

In the (industrial) field, the need to be able to process samples or workpieces being larger than the work field as defined above, exists and can be enabled by the use of mechanical means for further moving the laser beam relative to the workpiece, or having the workpiece scanned in respect to the laser beam outside the work field. In particular, at the end or output of the optical system (e.g. scanning module), or in case fully integrated at the end or output of the laser system, the laser beam and the workpiece can be moved relative to one another, outside the work field in a translative way e.g. in one, two or three (orthogonal) directions. In essence such use of mechanical means or mechanical move, while going outside the initial work field, defines other work fields.

A laser beam operates locally on part of (or on) a workpiece. A certain layer of the workpiece can be processed, herewith defining for example a particular zone e.g. upper surface layer, wherein the same laser parameters, amongst which e.g. the same wavelength, can be applied. A so-called processing zone of a workpiece can be defined as a part of that workpiece, for example a cross-sectional part, being processed with laser parameters in the same operating context. For instance, laser operating parameters may be equal or similar at the surface of a workpiece, whereas different operation can be set for processing within the bulk material. A processing zone may thus comprise of at least one layer but may also comprise of a plurality of layers. On the other hand, a processing zone doesn't necessarily have to be a particular layer or layered part of the workpiece. In case of a workpiece being larger for instance than the work field or scanning field, a processing zone can also be defined as part of the workpiece laying either inside or outside of the scanning field, wherein the material is all or not provided to be processed at a certain time.

However, having more than one work field as discussed above, causes problems for the laser beam processing, as it may change the de facto operating zone and therefore combining the neighbourhood of two close in distance (neighbouring, tangential) work fields (and consequently the processing zones related thereto) to enable forming a feature or a part of feature which is greater than the laser beam deflection system limited work field, requires defining specific operating zones taking this into account as further outlined in the first aspect of the invention.

As discussed above, having of two or more operating zones, for whatever reason (such as the example discussed above), causes problems for the laser beam processing and therefore combining the neighbourhood of two close in distance (neighbouring, tangential) processing zones to enable forming a feature or a part of feature, relying on or the inevitable having of two or more operating zones requires special technical considerations. As an example, a method for, by use of material processing, creating a feature such as a hole in a workpiece results inevitably in defining a first processing zone for creating (part of) said feature at the surface of said workpiece and defining a second processing zone in the bulk of said workpiece where (the remaining of) the feature, i.e. the hole is to be made. Therefore, the combining of these processing zones to enable forming such type of feature or a part thereof, requires to attach specific considerations in relation to the different processing zones (or operating zones) taking this into account as further outlined in the second aspect of the invention. It can be mentioned yet, that when making a feature such as a hole in a workpiece, the operating conditions for laser processing at the surface of the workpiece where the hole is made can be quite different from the operating conditions in the bulk of the workpiece material.

Generally speaking the invention pertains to a method for, by use of material processing, creating a feature on a workpiece with a laser having variable laser processing parameters, the method comprising: (a) defining, either explicitly (e.g. as defined by the operator) or implicitly (e.g. as in the case for feature creation), for the workpiece a first processing zone and a second processing zone; (b) within said first processing zone, moving the laser beam of said laser and said workpiece relative (translative) (in one or two or three (orthogonal) directions) to one another to thereby remove material with the laser beam of said workpiece; (c) thereafter repeating step (b) for the second processing zone, wherein processing takes considerations in relation to the laser beam being faced with different processing zones into account to avoid surface chipping. More generally, defining different processing zones can go along with either adapting the shape locally (in particular at borders of different processing zones where these processing zones from more than one work fields are to combined) of cross-sectional configuration of the workpiece being processed and/or changing the laser processing parameters.

In a first aspect of the invention a method for material processing of (or on) a workpiece with a laser is considered, the method comprising: (a) defining for the workpiece at least two processing zones; (b) within one of the at least two processing zones, moving the laser beam of the laser and the workpiece relative (translative) (in one or two or three (orthogonal) directions) to one another, to thereby remove material with the laser beam on the workpiece; (c) thereafter repeating step (b) for another of the at least two processing zones, wherein the (3-dimensional) shape of the processing zones being set, to reduce (cracking / beam shielding) problems in the material, due to the laser beam, experiencing discontinuities (resulting in beam scattering) in the regions (boundaries) in the neighbourhood of two close in distance (neighbouring, tangent) (in terms of laser beam size) processing zones.

In the first aspect in essence, we have at least two work fields and the different operating zones caused by this need to be (horizontally) combined, linked or merged (also denoted as stitching). Those (horizontally linked) processing zones are being defined to extend the beam deflection field being limited by the beam deflection system, and those (horizontally linked) processing zones are being selected on the workpiece by translating the workpiece with respect to the laser beam using a translation device.

Alternatively said, in a first aspect a method being provided to extend operations beyond the laser beam deflection or laser scanning field during material processing on or of a workpiece with a laser, the method comprising: (a) providing the workpiece (having dimensions going beyond the scanning field ); (b) defining for the workpiece at least two processing zones (to be combined or connected), defined as zones of the workpiece to be processed (within the laser scanning field); (c) selecting one of the at least two processing zones, and within the one processing zone moving the laser beam of the laser and the workpiece relative to one another to thereby remove material within the one processing zone of the workpiece; (d) selecting a further of the at least two processing zones, and repeating relative laser beam movement and material removal as in step (c) for the further processing zone, wherein the borders of the processing zones, in particular those of the one processing zone to be combined or connected with those of the further processing zone are processed gradually, resulting in gradual material removal and thus an inclined cross-sectional cut of the particular borders of the workpiece.

In a second aspect of the invention a method for, by use of material processing, creating a feature such as an aperture or a hole in (or on) a workpiece by means of a laser having variable laser processing parameters is considered, the method comprising: (a) defining for the workpiece a first processing zone for creating (part of) said feature at the surface of said workpiece and a second processing zone in the bulk of said workpiece where (the remaining of) said feature is to be made; (b) within said first processing zone (at the surface of said workpiece), moving the laser beam of said laser and said workpiece relative (translative) (in one or two or three (orthogonal) directions) to one another to thereby remove material with the laser beam on said workpiece; (c) thereafter repeating step (b) for the second processing zone (in the bulk of said workpiece), wherein the laser processing parameters are altered depending on the (first or second) processing zone to avoid processing defects such as for example surface chipping at the surface of said workpiece.

In the second aspect in essence, we have one work field and the different operating zones caused by the milling process (surface effects during processing versus bulk normal throughput) are to be (vertically) combined, linked or merged.

In a third aspect of the invention a laser or laser system with variable laser processing parameters, suited for or enabling the above defined methods is proposed. The variable laser processing parameters can be pulse duration (e.g. between 1000 ns and 100 fs) and/or pulse burst envelope duration and/or used wavelengths. The means to vary the laser pulse duration may be based on the use of a gain-switching or a volume Bragg grating, or a fiber oscillator and a fiber stretcher or a chirped pulse stretcher. It may also be a combination of different techniques, all or not including switching optical signals from different oscillators/stretchers.

As explained above, part of the invented methods require a laser or laser system with variable laser processing parameters, but when realizing this requirement or the availability of this capability, one can exploit this, by providing as a fourth aspect of the invention a method for material processing of (or on) a workpiece with a laser, wherein the method is comprising: (a) defining for the workpiece at least two processing zones; (b) within one of the least two processing zones, moving the laser beam of the laser and the workpiece relative (translative) (in one or two or three (orthogonal) directions) to one another, to thereby remove material with the laser beam on the workpiece; (c) thereafter repeating step (b) for another of the at least two processing zones, wherein the laser processing parameters are altered depending on the one or another of the at least two processing zones. In an embodiment thereof, the laser processing parameters are altered in different of said at least two processing zones to control the material removal rate and quality (crack formation at the boundaries of the processing zone) for each individual of said at least two processing zones or a plurality of said at least two processing zones. In another embodiment thereof, the method of selecting the laser processing parameters is to jointly optimize the material conversion efficiency and the required power consumption. In another embodiment thereof, the method of selecting the laser processing parameters is to jointly maximize the volumetric material removal rate and the control of the processed feature boundary surface properties.

In a preferred embodiment, the process is performed rear-side or rear-surface (bottom-up processing of transparent materials). Herewith, we focus onto the back side of the rear-surface (also referred to as second surface), and remove the material by scanning the laser beam, during which the focus of the laser beam (generally) being adjusted. The material is being removed layer-by-layer. The processing zone can consist of one layer or a plurality of layers. The material of the workpiece is transparent to the laser wavelength, but the workpiece second surface can contain transparent, absorbing, diffusive or reflective properties for the selected wavelength.

### Brief description of the drawings

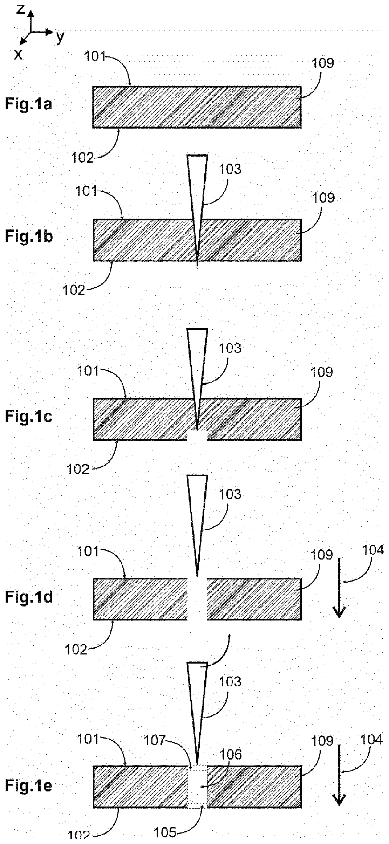

Fig.1 Illustrates schematically in cross-sectional view an embodiment, wherein laser processing thereof at different stages in accordance with the invention.
Fig.1a shows a workpiece 109 with first laser beam impingement surface 101 and a second surface 102 opposite to the first surface.
Fig.1.b shows a laser beam 103 to be focussed of the second workpiece 109 surface.
Fig1.c) shows a laser beam 103 to be moved in accordance to processed feature facilitating layer -by-layer material removal in the direction of the laser beam propagation direction.
Fig 1d shows a feature to be formed in the workpiece 109.
Fig1e Illustrates schematically an embodiment of the workpiece and different processing zones during laser processing thereof in accordance with the invention.
Fig.2 Illustrates schematically in cross-sectional view an embodiment of the workpiece laser processing and in particular possible shapes of its material volume removal in accordance with the invention, wherein entire material removal for making a hole or aperture being shown.
Fig.2a shows schematically in cross-sectional view of the processed feature shape to be rectangular expanding from the second workpiece surface to the first workpiece surface.
Fig.2b shows schematically in cross-sectional view of the processed feature shape to be trapezoid expanding from the second workpiece surface to the first workpiece surface.
Fig.2c shows schematically in cross-sectional view of the processed feature shape to be any kind of shape expanding from the second workpiece surface to the first workpiece surface.
Fig.2d shows schematically in cross-sectional view of the processed feature shape to be any kind of shape expanding from the second workpiece surface into the bulk of the workpiece.
Fig.3 illustrates schematically an embodiment, wherein the scanner field stitching method is schematically described.
Fig.3a shows the laser processing principal scheme for material processing of a workpiece.
Fig.3b shows possible work fields for material processing of the workpiece.
Fig.3c shows cross-sectional view of the workpiece being laser processed herewith showing the laser scanning field extension method in accordance with the invention.

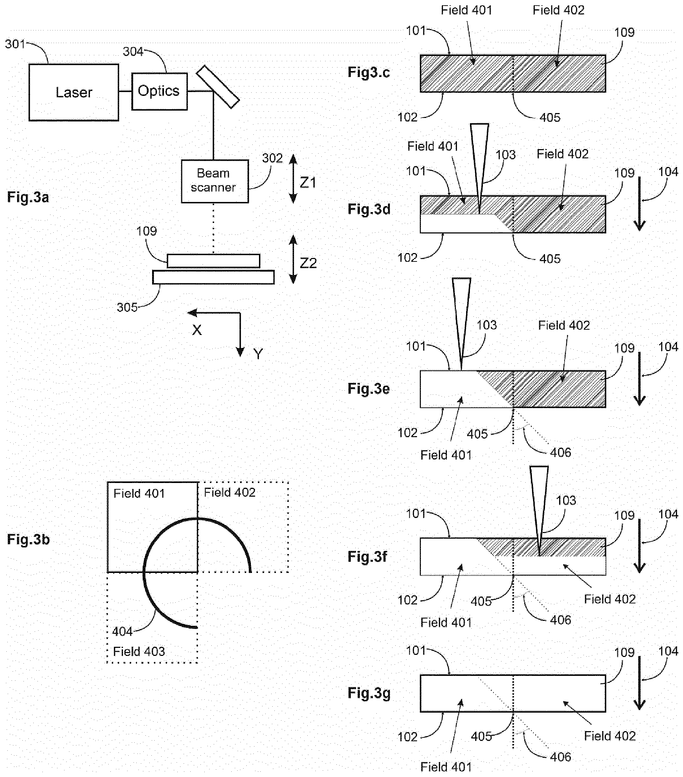

Fig.3.d shows cross-sectional view of the partially laser processed part (zone) at the work field 401 with inclined boundary with in work field 402.
Fig.3.e shows cross-sectional view of the laser processed part (zone) at the work field 401 with inclined boundary with in work field 402 extending from the workpiece second surface to the first surface with in work field 402.
Fig.3.f shows cross-sectional view of the partially laser processed part (zone) at the work field 402 with inclined boundary with in work field 401 with in work field 401.
Fig.3.g shows cross-sectional view of the laser processed part (zone) at the work field 402 with inclined boundary with in work field 401 with in work field 401 realizing complete scanner work field stitching.

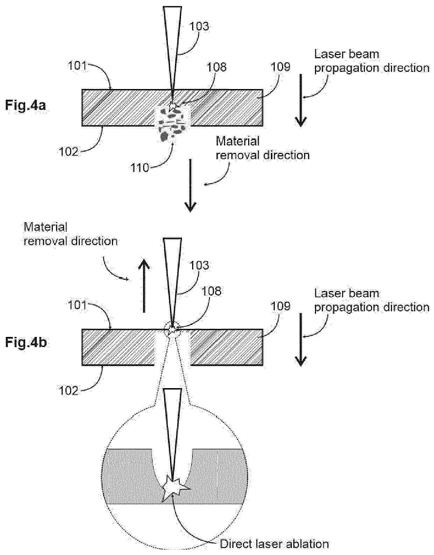

Fig.4 illustrates schematically in cross-sectional view an embodiment of the workpiece laser processing, the laser beam propagation and material removal direction.
Fig.4a shows the case where rear-surface (in lower/middle area of the workpiece) laser processing being applied in accordance with the invention.
Fig.4b shows the case where front-surface (in upper area of the workpiece) laser processing being applied in accordance with the invention.

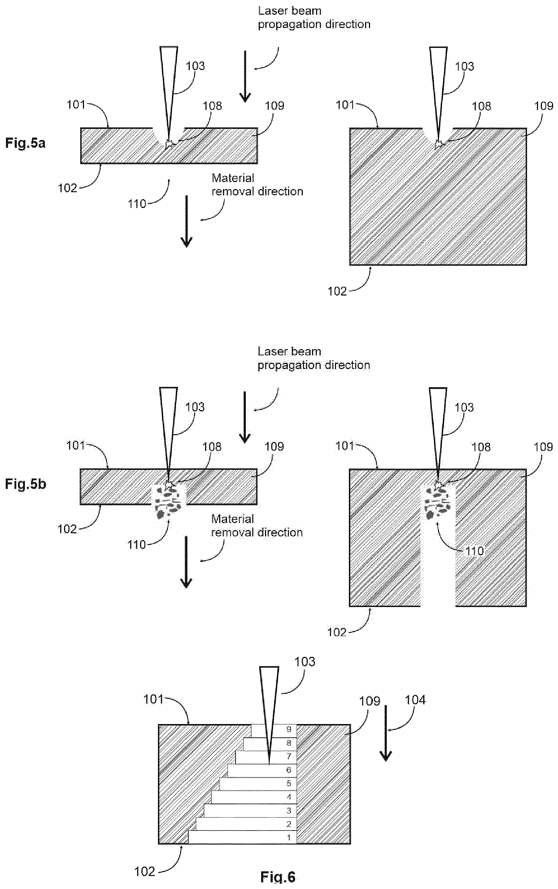

Fig.5 illustrates schematically in cross sectional view the effect of top side and rear side ablation.
Fig.5a Shows top side direct ablation where it can be performed particularly for the top layer area of the workpiece in accordance with the invention.
Fig.5b Shows rear side direct ablation.
Fig.6 illustrates schematically in cross-sectional view an embodiment of the workpiece with a gradually differing hole shape as a result of (multi-layer) laser processing in accordance with the invention, wherein the numbers from 1 to 9 represent the different layers or processing zones (here 9 in total).

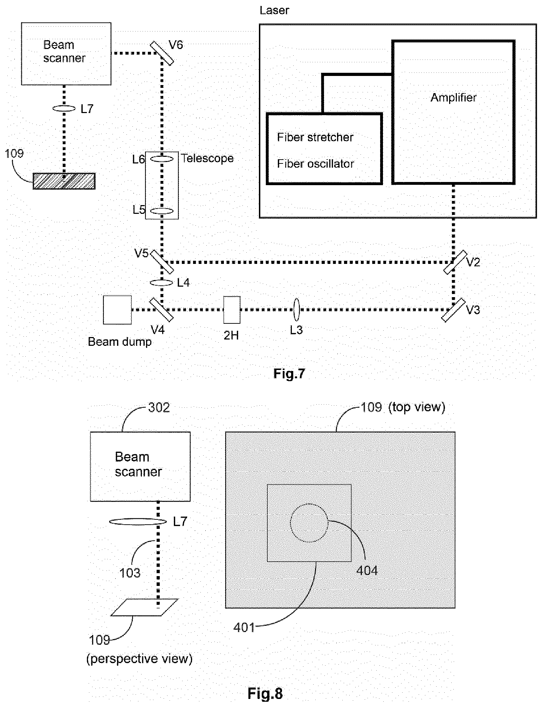

Fig.7 illustrates schematically an embodiment of the laser processing arrangement in accordance with the invention.
Fig.8 illustrates schematically an embodiment of the laser processing with a scanner set-up in accordance with an embodiment of the invention.

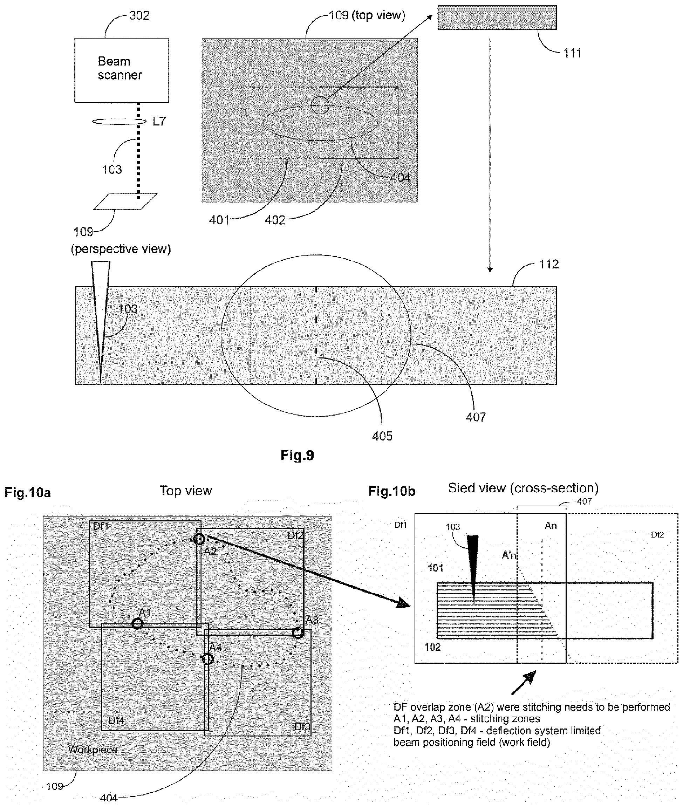

Fig.9 illustrates schematically a variation of the embodiment of Fig.8 in accordance with the invention, depicting further cross-sectional view.
Fig.10 illustrate schematically embodiments of so-called stitching process during laser processing of a large workpiece in accordance with the invention.
Fig.10a shows top view of the workpiece and the feature to be processed therein covering multiple processing zones or work fields.
Fig.10b shows cross-sectional view is given of the feature to be processed in a border area for combining processing zones or connecting adjacent work fields.
Fig.11 illustrates an exemplary embodiment of a large feature 2 to be processed (e.g. piece to be cut out with cutting contour) in a workpiece.
Fig.12 illustrates cross-sectional view of the feature to be processing in a border area for combining processing zones or connecting adjacent work fields.
Fig.12a shows the stitching procedure being represented by cutting a first part of the contour of the feature 2 within the working area 3 of Fig.11.
Fig.12b shows cutting of the second part of the feature 2 within the working area 3 of Fig.11

### Detailed description of the invention

To overcome process speed and quality issues in currently discussed material laser processing, the present invention refers to the use of a hybrid laser which can switch the pulse duration from nanoseconds to picoseconds (or even femtoseconds) in different sample or workpiece processing zones. The invention relates to laser processing using for example longer laser pulses (i.e. nanoseconds range) to produce high throughput bulk material removal and switching the laser system to shorter pulse durations (i.e. picoseconds to femtoseconds range) for precise material removal close to the workpiece's first and second surfaces. The range of the laser pulse duration can be set from 1000 nanoseconds to 100 femtoseconds. The material sample volume can be divided into different laser processing zones, where laser power, pulse duration, spacing between the laser induced modifications in the material and other processing parameters can be altered. With the invented laser processing method, high speed material removal (bulk) being combined with high quality surface finishing, using a laser system having one single laser source applicable for both nanoseconds to picoseconds, possibly even to femtoseconds pulses range. Moreover, by means of example, it is worth mentioning that for chamfer formation, it is not recommended to do it with nanoseconds pulses only.

The invention is in the field of methods for material processing like drilling, milling and cutting of (or on) a workpiece with a laser. While referring to Fig.1-3, we hence have a context of having a laser beam to be focused through the workpiece 109 first surface 101 onto its second surface 102, or outside the workpiece 109 close to its second surface 102, where material is being removed in the direction of the laser beam propagation or opposite direction. While single-layer processing is not excluded, in most situations considering rear-surface processing, the workpiece material is removed layer-by-layer while adjusting the laser beam focus position or focal point (where material being removed) with respect to the workpiece second surface 102 towards its first surface 101 for performing a full straight cut as for example illustrated with Fig.1 b) - 1 d).

As mentioned above, material is being removed in the direction of the laser beam propagation or opposite direction. This is now further explained together with Fig. 4. While referring particularly to rear-surface processing, the material 110 of the workpiece 109 e.g. in glass, is mainly being removed in the same direction as of the laser beam propagation as shown in Fig.4a. We start to remove material 110 from the bottom side at the rear surface. The focus 108 of the laser beam 103 is then also at the rear side or rear surface of the workpiece 109. Next, layer-by-layer, the material 110 is being further removed while moving the beam focus 108 (upward) together therewith, i.e. changing the focus position of the laser beam 103 gradually from rear towards front surface. As illustrated in Fig4b, we may end up with a very thin layer of glass left at the front surface. When the layer thickness is getting comparable to the optics depth of focus, the top-surface can be damaged still keeping the thin glass layer underneath. Whenever this happens, we start to remove this thin layer from the top side (and no longer from the bottom side) i.e. the side of the workpiece where the laser beam enters the workpiece. As a result, this means that now the laser ablated material is being removed to the opposite direction (above the top side of the workpiece) of the laser beam propagation direction. This processing in the opposite direction is well known as so-called direct laser ablation.

As clearly shown in Fig.5a, a "V" shaped channel/hole is formed with direct laser ablation from the top side. This may be very critical especially for thick glass cutting or any material cutting. The "V" shaped hole/channel is formed due to Gaussian beam shape, material shielding and side wall reflections. Therefore, it is not possible to avoid "V" shape formation when ablating the material from the top side. Eventually, while cutting/drilling deeper in to the material the process stops completely. The only available solution in such case is widening the kerf of the channel/hole. In other words, the direct laser ablation enables to cut/drill features with limited aspect ratio, e.g. up to 1:2. Hence, the top side or front-surface processing (direct laser ablation) is only reasonable for thin glass (e.g. the final thin glass layer as discussed above) up to 0.5 mm thickness.

As for rear-side cutting as depicted in Fig5b, the channel/hole being made has no taper and the aspect ratio can be much larger, e.g. up to 1:10 or more. Hence, rear-side processing enables us to cut thicker material such as glass (up to 20 mm tested). The side walls of the cut have no taper, which may be rather important for many applications. It is also noted that the material removal rate in case of rear-side cutting can be much higher, since the material is being removed in particle form (as opposed to direct laser ablation where material removal occurs mainly in gas form for ns-fs lasers). It is therefore preferred to rather refer to applications of rear-side or rear-surface processing of transparent materials, being moreover the only process operable on an industrial scale for thick glass cutting or drilling.

In Fig.5, examples are given of both (a) front-surface processing or top side direct laser ablation and (b) rear-surface processing or rear-side cutting. Herewith, the "V" shaped channel/hole formation in case of top side direct laser ablation being clearly depicted, and compared with possible rectangularly shaped material removal in case of rear-surface processing. It also becomes clear with these illustrations that having a "V" shaped channel/hole formation only at the top thin layer may be rather acceptable. Preferably a (substantial) part of the material being processed e.g. cut is transparent, in particular being transparent to the one or more laser wavelengths whereat the material processing takes place. Exemplary embodiments of such materials are for instance soda lime glass, borosilicate glass, or fused silica.

The laser system for laser material processing of (or on) a workpiece in accordance with the invention, comprises a laser and an optical system being connected thereto, wherein the laser system can direct and focus the laser beam in predetermined track in both horizontal (in xy-plane) and vertical (along z-axis) directions, herewith enabling to produce a plurality of traces or cuts grouped or clustered in layers (i.e. referring to layer-by-layer removal of material). At least one or plurality of layers can be grouped to a so-called processing zone of the workpiece. Multiple processing zones can be defined for one single workpiece. The laser system can assign different processing parameters for each of the defined processing zones, although per processing zone the same laser operating or processing parameters will be used. By means of example, from one processing zone to another, e.g. from the workpiece surface towards its bulk part, the laser system may be configured for fast switching from short laser pulse durations towards longer pulses, which can be varied for instance from 100 femtoseconds up to 1000 nanoseconds, while passing from the one processing zone to the other.

The invention further relates to laser processing using a so-called stitching method to stitch material parts at sample or workpiece cutting paths, for samples or workpieces being larger than the laser beam scanning field or work field dimensions.

### Detailed description of the embodiments

While referring to the drawings, different embodiments in accordance with the invention will now be described.
Fig.1 presents an embodiment of the workpiece 109 and its material volume removal in cross-section, while illustrating the laser beam 103 and its position with respect to the workpiece 109, in various stages of the workpiece material processing with a laser.
Fig.1a shows only the workpiece in cross-section, herewith indicating the workpiece 109, its first surface 101 and second surface 102. In Fig.1b the laser beam 103 and its position with respect to the workpiece 109 is also shown in cross-section, wherein first and second surfaces 101, 102 being indicated again. As illustrated, the laser beam 103 is being transmitted through the workpiece 109, herewith passing its first surface 101 to then be focused onto the second surface 102. Alternatively (not shown), the laser beam 103 can also be focused close to the second surface 102 (just) outside the workpiece 109. It is noted that according to the embodiment of the invention, laser light intensity is not sufficient for the damage or substantial material modification at the first surface 101, but passing through the workpiece 109 the laser beam 103 is being focused inside the workpiece 109 to reach the critical intensity or fluence in order to make substantial workpiece damage, cracking and ablation at the second surface 102.
Fig.1c shows cross-section of the workpiece 109 and the laser beam 103 wherein material volume has been removed from the workpiece 109, as can been clearly seen by means of the white or blank spot just below the pointing of the laser beam 103.
Fig.1d shows cross-section of the laser beam 103 and its positioning with respect to the workpiece 109, here when further material volume has been removed, hence depicting the evolution of creating a gap or cut during laser processing. With the arrow 104, the vertical movement along or parallel to the z-axis being indicated. Fig. 1e illustrates the cross-section of the workpiece 109 and the location of its processing zones 105, 106, 107 with respect to the workpiece 109 and its first and second surfaces 101, 102.

The laser beam positioning with respect to the workpiece 109 can be adjusted both in horizontal xy-plane and vertically along z-axis or parallel therewith as indicated with arrow 104. The laser beam is being positioned with respect to the workpiece 109 in a predetermined track to form the ablation channel as illustrated in Fig.1c and Fig.d. The workpiece material is being removed in the same direction as the laser beam propagation direction or opposite direction. According to an embodiment, the workpiece material is being removed layer-by-layer. The workpiece material removal during processing, can be in a particle form or by the workpiece 109 material evaporation (ablation) process or by a combination of both. As indicated with arrow 104, the vertical position of the workpiece 109 can be changed with respect to the focus position of the laser beam 103 e.g. after a material layer or a plurality of layers have been removed. Hence, we can change the focus position. It can be changed step-by-step after one layer, or after a few layers or it can be changed continuously. The example of a plurality of layers being motivated, since the focusing optics depth of focus allows to remove more than one layer at the same focus position. In other words, we can change the focus position after one layer is being removed, but we can also change the focus position after for example 3 or 5 layers are being removed, and moreover we can change the focus position continuously while removing the layers (layer-by-layer). The workpiece 109 can thus also be moved vertically with respect to the laser beam 103 in a continuous manner, while further positioning the laser beam 103 with respect to the workpiece 109 in the horizontal xy-plane.

According to an embodiment of the invention, the workpiece material processing may occur with one pulsed laser having one wavelength and a pulse duration in the range from 100 nanosecond to 100 femtoseconds. The use of a pulsed laser having multiple wavelengths, or the use of multiple pulsed lasers all or not having more than one wavelength, is not being excluded as a possible embodiment. The laser wavelength can be from 100 to 3000 nm. By means of example, a Nd:YVO₄ laser at 1064 nm (all or not including frequency doubled 532 nm) or an Yb:KGW laser at 1030 nm are applicable as laser sources. The processing parameters considered at particular laser wavelength may comprise average power, fluence or optical intensity, pulse repetition rate, pulse duration, distance between the laser induced spots or modifications (cracks, craters), distance between the layers (to be removed), pulse burst mode, burst spacing and number of pulses in the burst. The focus position or focal point of the laser beam with respect to a certain layer of the workpiece can be determined for only one individual layer or for a plurality of layers being comprised within the workpiece.

According to an embodiment, the plurality of layers can be grouped in processing zones. In Fig.1e an example is shown of the workpiece 109 and its processing zones 105, 106, 107. It is noted that, both horizontally (in xy-plane) and vertically (along z-axis) different processing zones and stacking thereof can be arranged for the workpiece 109. The processing parameters of the laser system are for example set to start initial ablation at the second surface 102 and continuing processing in the processing zone 105. Next, after a certain amount (one or more layers) of material has been removed by the laser beam 103 in the processing zone 105, the processing parameters can be set to remove bulk material of the workpiece 109 in the processing zone 106. When the depth of the ablation channel reaches the processing zone 107, the processing parameters can be altered again to finish the material removal of the workpiece 109 in the area of its first surface 101. According to an embodiment, the laser pulse duration is set in the range from 100 nanosecond to 100 femtoseconds for the processing zones 105, 106, 107. Each processing zone 105, 106, 107 of the workpiece 109 may have different or similar/equal laser processing parameters. The laser process parameters can be set individually for each processing zone including (but not limited thereto): one or more laser wavelengths, power, fluence or optical intensity, pulse repetition rate, pulse burst mode, pulse burst duration, pulse duration, distance between the laser induced spots or modifications (cracks, craters), distance between the layers, focus position of the laser beam with respect to the processing zone, pulse burst mode, burst spacing and number of pulses in the burst.

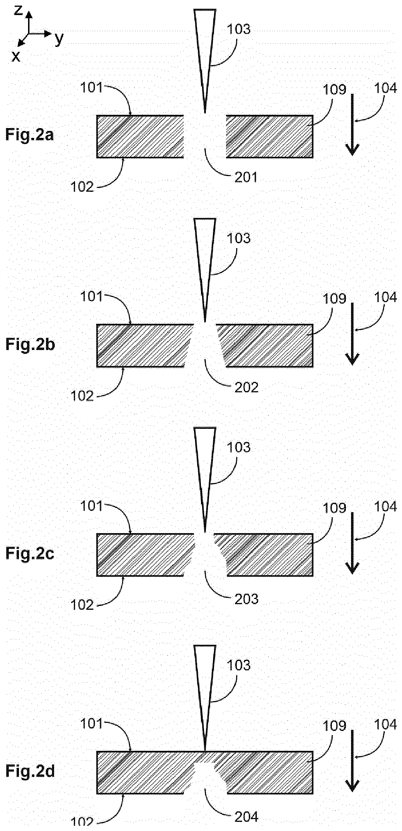

Fig.2 presents an embodiment of the workpiece 109 and in particular possible shapes of its material volume removal in cross-sectional view. In Fig.2a a rectangular shape 201 is shown in cross-section for the material volume being removed by means of the laser beam 103, whereas in Fig.2b a trapeze shape 202 being depicted for the processed gap. Fig.2c shows a predetermined shape 203 in cross-section of the removed material volume. Fig. 2d shows only part 204 of this predetermined shape in cross-section whereas the material volume is not yet fully removed up to the workpiece 109 its first surface 101 as in Fig.2c.

According to an embodiment, at least one processing zone for the workpiece 109 can be determined and applied to drill, cut or mill the workpiece 109. Fig. 2 show possible geometries of the ablation channels in cross-section, which can be produced by means of the laser processing. The channel cross-section can be configurated in rectangular shape 201, trapeze shape 202, or any arbitrary type of shape 203 that is being predefined during the processing. The ablation channel can be processed through the entire workpiece 109 as depicted in Fig.2a - Fig.2c or ablated up to a predefined depth value or part 204 with respect to the second surface 102.

The hole shape can be changed by adjusting the layer dimensions of the layers being removed (layer-by-layer) during the drilling process. Fig. 6 illustrates in cross-sectional view of an embodiment of a hole shape showing gradually differing material removal (per layer) over 9 layers, enabled for example by adjusting the layer xy-dimensions and focus position in order to produce a hole of this particular shape.

Fig.3 presents an embodiment of the laser processing principal scheme for material processing of a workpiece 109 and the laser beam deflection optics field (or laser scanning field, or work field) extension method. Fig. 3a presents a processing arrangement comprising the laser system including a laser 301, optics 304 and a beam scanner 302. The processing arrangement further comprises an xy-table 305, also movable in vertical direction along the z-axis, onto which a workpiece 109 can be mounted for processing. The beam scanner 302 defines the laser scanning field or work field on the xy-table and the workpiece 109 mounted thereon. According to this embodiment, the entire workpiece 109 is being covered by the scanning field (falls there within) and can be processed entirely while lying on the xy-table. Fig. 3b shows the laser beam deflection optics processing field extension, also referred to as scanning field extension or work field extension. The workpiece 109 is now larger than the scanning field of the beam scanner 302, and more in particular the workpiece 109 is covering here multiple work fields 401, 402, 403 for the feature 404 to be processed therein. Fig.3c shows cross-sectional view of the workpiece 109 and applicable work fields 401, 402 therewith, including dotted 'stitching' line 405 meaning the border or boundary in the workpiece 109 where separate work fields 401, 402 come together.

Fig. 3d) - Fig.3g show schematic view of the laser beam processing steps at the neighbouring or border zone of the work fields 401, 402 to so-called stitch the predetermined cutting or milling path in neighbouring work fields.

The laser processing arrangement in accordance with an embodiment of the invention, is schematically illustrated in the Fig.3a. The processing arrangement may include one or more laser sources, although here being depicted just one 301. The optics 304 may also be referred to as beam delivery system, whereas the beam scanner 302 can also be denoted as beam deflection and focusing optics. As yet mentioned above, the processing arrangement further includes the xy-table 305 having the workpiece 109 (or in some occasions, e.g. when the workpiece 109 being larger than the scanning field, only part of the workpiece 109) being mounted thereon. Both xy-table 305 and beam scanner 302 can be adjustable in vertical position along or parallel with z-axis as being indicated with the double arrows Z1, Z2. The double arrows Z1, Z2 particularly indicate that vertical positioning can occur in two directions, i.e. in accordance with the embodiment here in upward and downward direction. By means of this vertical positioning, the focus position of the laser beam can be adjusted at the exact location (height) where material has to be removed from the workpiece onto which the laser beam is hit. According to another embodiment, for example only the xy-table 305 or only the beam scanner 302 being adjustable and controllable for different vertical positioning stages (while the other being fixed along the z-axis). The focus position or focal point of the laser beam can also be controlled by altering the wave front of the laser beam. With the xy-table 305 further included in the processing arrangement, positioning of the workpiece 109 can also be controlled in xy-plane, i.e. along x-axis and/or y-axis. According to an embodiment, the processing arrangement itself can also be shifted in the xy-plane keeping the workpiece 109 stationary, for example when an xy-table 305 cannot be provided or is not available to mount the workpiece 109 thereon. In case the workpiece 109 being larger than the scanning field, it may be preferred that the workpiece 109 remains stationary on a large table, and the processing arrangement is moved in the xy-plane until all necessary work fields or processing zones of the workpiece have been featured.

According to the embodiment, the beam scanner 302 comprising beam deflection and focusing optics, has predetermined work field 401 which has limited dimensions in xy-plane. In order to process a workpiece 109 with larger dimensions than the work field 401, the position of the workpiece 109 with respect to the work field 401 can be altered as shown in Fig.3b. More than one work field shift operation with respect to the workpiece 109 position can be realized with the processing arrangement in order to process the predetermined cutting or milling path 404 which is greater than the work field 401.

After the workpiece 109 being shifted with respect to the scanning field position, the connecting position 40, 41 of the predetermined cutting or milling path 404 in the work field 401 is so-called stitched with the connecting position 42, 43 of the predetermined cutting or milling path 404 in the other work fields 402, 403 respectively. Entire material removal (as usually performed), in order to generate the predetermined cutting or milling path 404, at location far enough away from these connecting positions 40, 41, 42, 43, is easily achievable with rear-surface processing. However, close to the connecting positions 40, 41, 42, 43 the laser rear-side or rear-surface cutting or milling technology cannot perform material removal creating a straight cut along the vertical z-axis. At or close to the connecting positions or so-called physical boundaries of the workpiece 109 such straight cut (being parallel to the laser beam propagation direction) is not feasible due to light scattering and beam deflection by the boundaries or straight cut itself. It is noted that the boundaries can be interpreted in fact as the borders of the different processing zones (being defined particularly for a large workpiece 109) within respective corresponding work fields 401, 402, 403, and such processing zones to be combined or connected. Phenomena like stresses and forces would hence appear there, resulting in cracking and bursting of the material. Therefore, the work field stitching and boundary processing is done in predetermined way. The predetermined path stitching procedure is schematically illustrated in Fig.3 c - Fig.3g).

Fig.3c presents an embodiment of the cross-sectional view of the workpiece 109 being larger than the scanning field. The dotted 'stitching' line 405 represents the border or boundary between the work fields 401, 402. More precisely, the borders or boundaries of different work fields may overlap for a predetermined distance, whereas the stitching line 405 may represent the middle or centreline of the overlapping borders or zones of the work fields 401, 402. The predetermined (here circularly) cutting path 404 may form a cross-sectional straight cut trace or channel in the workpiece 109. In particular embodiment the cutting process is realized removing entire workpiece material from the second surface 102 up to the first surface 101. The laser beam 103 is positioned in the work field 401 to produce a predetermined cutting path in the work field 401. The end of the predetermined cutting path in the work field 401 (but also the beginning of the predetermined cutting path of the work field 402) is being produced at the boundary of the work fields 401, 402 in a way that the predetermined path at the boundary is not parallel to the stitching line 405, but forms an angle 406 with respect to the stitching line 405, as depicted in Fig. 3d - Fig.3f). Afterwards, the position of the workpiece 109 is shifted with respect to the work field 401. Then the laser beam 103 is positioned in the work field 402 to produce the predetermined cutting path 404 in the work field 402 to overlap the predetermined cutting path boundary in the work field 401. In the work field overlapping border or zone the angular predetermined cutting or milling path 404 stitching procedure is applied, as being illustrated in Fig.3f and Fig.3 g. This procedure allows to stitch the predetermined cutting or milling path 404 for multiple work fields to form the entire predetermined cutting path 404 in the workpiece 109.

Fig.7 schematically illustrates an embodiment of the laser (multi-wavelength) processing arrangement in accordance with the invention. In this schematic representation, the laser 301 being used is indicated, including here the fiber stretcher and fiber oscillator connected with the optical amplifier for enabling change of the laser pulse duration at 1064 nm wavelength. The aim is to attain a range of pulses from 1000 ns to 100 fs. Further indicated in the drawing, following the optical path, are second harmonic (2H) frequency doubling optics (to generate 532 nm), a telescope and the beam scanner 302. We can also follow here the optical path of the beam emitted by the laser at 1064 nm wavelength, being reflected by the mirror V3, and focused by means of a lens L3 to be coupled into the frequency doubling component 2H, representing both 1064 nm and 532 nm at the output thereof. Both wavelengths are captured by the semi-transparent mirror V4, reflecting 532 nm towards a lens L4, followed by a telescope comprising of lenses L5, L6 followed by the scanner, while transmitting 1064 nm to a beam dump. The green light at 532 nm being particularly selected whereas it causes more efficient and better cutting of the workpiece during the laser processing. Additional mirror V2 is shown here (before mirror V3 in the optical path) for reflecting and transmitting the 1064 nm beam being emitted by the laser. The 1064 nm and 532 nm output are captured by respective beam combiners V5, V6. This way the system enables of selecting two-wavelength processing with ability to vary the pulse duration in the range of 1000 ns to 100 fs.

With Fig.8, a laser processing scanner set-up being represented in accordance with an embodiment of the invention. As shown, the laser beam 103 is being emitted from the scanner 302, passing a lens L7 for focussing the beam onto the workpiece 109 for material processing. Top view of the workpiece 109 being also shown wherein the scanning field or work field 401 being indicated, here by means of example a 70 mm × 70 mm square area, and therein the feature 404 to be processed represented by a dotted circle.

With Fig.9, similar laser processing scanner set-up as in Fig.8 being represented in accordance with an embodiment of the invention. However, the feature 404 to be processed here, represented by an ellipse, being much larger than the scanning field or work field 401, now also covering the work field 402. Enlarged cross-sectional view is shown of part 111 of the workpiece in the border area of the processing zones or in the area of the feature to be processed where work fields 401, 402 are adjacent. Further enlarged view 112 of this part (together with enlarged laser beam 103 for rear-surface processing) is illustrated indicating the so-called stitching area 407, where stitching of the two processing zones is needed, and stitching line 405. The stitching doesn't refer to a literal stitch, but to a way of processing the material in this area where work fields or processing zones need to be combined, and performing this way of processing such that cracking and bursting of material (due to forces/stresses in the material) in this stitching area can be avoided.

Fig.10a illustrates top view of the workpiece and the feature to be processed therein covering multiple processing zones or work fields, whereas in Fig.10b cross-sectional view is given of the feature to be processed in a border area for combining processing zones or connecting adjacent work fields. In Fig.10a, the feature 404 to be processed in the workpiece 109 has a random shape, again being much larger than one single work field. In particular here, four work fields Df1, Df2, Df3, Df4 are indicated for processing the entire feature 404. For each border area A1, A2, A3, A4 of the workpiece feature to be made, so-called stitching is needed. In Fig.10b cross-sectional view is given of the feature to be processed in the border area A2, hence being stitched here, for combining processing zones or connecting adjacent work fields Df1, Df2. The processing in the stitching area 407 is representing an inclined cross-sectional shape for avoiding stresses and/or forces in the material and beam shielding, and thus eliminating cracking and bursting of the material in this area. Instead of processing along the stitching line An, processing is being performed along the inclination A'n in the stitching area 407. First and second surface 101, 102 of the workpiece 109 as well as the laser beam 103 being also indicated in Fig.10b.

## Claims

1. A method for laser processing of transparent materials, comprising
- focusing the laser beam through the first beam impingement surface of a workpiece to the second surface opposite to the first surface or outside the workpiece close to the second surface,
- adjusting the said laser beam focus position in respect to the said workpiece and removing the material layer by layer in the direction of the beam propagation direction or opposite of the beam propagation direction to form the feature in the workpiece, **characterized in that** the feature in the workpiece is formed as a whole or in parts, which borders of adjacent parts are joined to form a feature, wherein the laser processing parameters, by which the workpiece is processed, are altered through the thickness of the workpiece in order to avoid processing defects and optimize the said feature processing speed.

2. The method of claim 1, **characterized in that** processing of the workpiece with altering laser parameters comprising:
(a) defining at least two processing zones through the thickness of the workpiece wherein the first processing zone defined by said feature or the part of the feature is set at the second surface of the workpiece and a second processing zone or subsequent processing zones are set in the bulk or at the first surface of the said workpiece;
(b) within said first processing zone, moving the laser beam of said laser and said workpiece relative to one another to thereby remove material with the laser beam on said workpiece;
(c) thereafter repeating step (b) for the second processing zone or for subsequent processing zones, wherein the laser processing parameters are altered depending on said first or second or subsequent processing zones.

3. The method of claim 2, **characterized in that** the laser processing parameters are altered between of said at least two processing zones to control the material removal rate and crack formation at the boundaries of the processing zone for each individual of said at least two processing zones or a plurality of said processing zones.

4. The method of claim 1 - 3, **characterized in that** the material of workpiece being transparent or substantially transparent to the applied said laser wavelength.

5. The method of claims 1 - 4, **characterized in that** said altered laser processing parameters are one or more of the following: laser wavelength, average power, fluence or optical intensity, pulse duration, pulse repetition rate, pulse burst mode, burst envelope duration, burst temporary spacing, distance between laser-induced modifications and/or beam focal point in relation to the processing zone.

6. The method of claim 1, **characterized in that** in case when the feature is being formed in parts, in particular those of said one processing parts to be combined or connected with those of said further parallelly stacked processing parts are processed gradually, resulting in gradual material removal and thus an inclined cross-sectional cut of said particular borders of said workpiece.

7. The method of claim 2, **characterized in that** prior to step (c) a step of loading processing zone information and associated laser processing parameters being provided, to be used for steering step (c).

8. A device for laser processing of transparent materials, comprising a laser; an optical system connected to said laser and arranged between said laser and a workpiece, said optical system being adapted for manipulating the focal point of the laser beam exiting said optical system and/or a device for manipulating the workpiece in respect to the focal point, **characterized in that** the laser system comprises a means connected to said laser to vary the laser pulse duration and/or said laser pulse burst envelope duration, preferably in the range from 1000 nanoseconds to 100 femtoseconds.

9. The device of claim 8, **characterized in that** the means to vary the laser pulse duration is based on the use of a gain-switching or volume Bragg grating or fiber oscillator and a fiber stretcher or a chirped pulse stretcher.

10. The device of claim 8, **characterized in that** said optical system being configurable in selecting the appropriate components and optical path thereof in relation to the wavelength of the laser beam to be used for said material processing, wherein said material processing wavelength may vary from 100 nanometer to 3000 nanometer.

11. The device of claim 8 and 10, **characterized in that** said optical system being adapted for manipulating the wavelength of the laser beam exiting said optical system.

12. The device of claim 8, **characterized in that** said laser has a plurality of wavelengths, and at least part of said optical system being optimized for one or more of said plurality of wavelengths.
